# EUROPÄISCHE PATENTANMELDUNG

(11) **EP 1 918 178 A1**
(43) Veröffentlichungstag der Anmeldung: **07.05.2008**
(21) Anmeldenummer: 07021484.6
(22) Anmeldetag: 05.11.2007
(51) Int. Cl.: B62D 33/04

(54) **Kofferaufbau, Bausatz für und Nutzfahrzeug mit einem derartigen Kofferaufbau, Einfassprofil für einen Kofferaufbau und Verfahren zum Herstellen eines Kofferaufbaus**

(30) Priorität: 06.11.2006 DE 102006052237
(71) Anmelder: Kögel Fahrzeugwerke GmbH, 89349 Burtenbach (DE)
(72) Erfinder: Rink, Wolfgang, 89134 Blaustein (DE); Lima, Joachim, 89601 Schelkingen (DE); Rees, Markus, 89081 Ulm/Mährigen (DE); Guter, Ralph, 89129 Langenau (DE); Hellenschmidt, Dieter, 89134 Blaustein (DE)
(74) Vertreter: Kilchert, Jochen

(57) **Zusammenfassung**

Die Erfindung bezieht sich auf einen Kofferaufbau mit Plattenelemente (10), die im montierten Zustand winklig angeordnet sind. Sie zeichnet sich dadurch aus, dass den Plattenelementen (10) wenigstens ein, insbesondere mehrere Fügehilfsmittel (11) zugeordnet sind, die durch eine Fügebewegung der Plattenelemente (10) betätigbar sind.

## Beschreibung

Die Erfindung bezieht sich auf einen Kofferaufbau mit den Merkmalen des Oberbegriffs des Anspruchs 1. Die Erfindung bezieht sich ferner auf einen Bausatz für und ein Nutzfahrzeug mit einem derartigen Kofferaufbau, ein Einfassprofil für einen Kofferaufbau sowie auf ein Verfahren zum Herstellen eines Kofferaufbaus.

Kofferaufbauten werden im Nutzfahrzeugbereich für den Transport empfindlicher Güter eingesetzt, um diese vor Staub, Feuchtigkeit, Nässe sowie vor Temperaturschwankungen zu schützen.

Ein gattungsgemäßer Kofferaufbau ist beispielsweise aus der DE 43 17 376 A1 bekannt.

Dieser Kofferaufbau umfasst mehrere Wandelemente, die Seiten-, Vorder- und Rückwände bilden und mit einem Dach sowie mit einem Boden zusammengefügt sind. In der Rückwand ist ein Heckportal mit einer Tür zum Be- und Entladen vorgesehen. Die Seitenwandelemente sind mit den Decken- und Bodenelementen bzw. den Vorder- und Rückwandelementen durch Profilleisten verbunden, die im Querschnitt rechtwinklig ausgebildet sind. Diese Profilleisten weisen U-förmig ausgebildete Taschen auf, die rechtwinklig zueinander angeordnet sind. In diese Taschen sind die Wandelemente bzw. Decken- und Bodenelemente eingesteckt und befestigt. Die Befestigung erfolgt durch eine Klebeverbindung.

Die senkrecht zueinander angeordneten Aufnahmetaschen sind an den voneinander entfernt angeordneten Außenkanten durch einen Steg fest miteinander verbunden. Die Innenkanten der Aufnahmetaschen sind ebenfalls fest miteinander verbunden derart, dass sich insgesamt ein rechtwinkliges Profil ergibt.

Für die Klebeverbindung zwischen den Wandelementen und der Profilleiste sind in den Wandungen der Aufnahmetaschen Ausnehmungen vorgesehen, die mit Klebstoff befüllt sind. Generell besteht bei dieser Bauweise die Gefahr, dass beim Einschieben der Wandelemente bzw. Boden- oder Dachelemente in die Aufnahmetaschen der eingebrachte Klebstoff undefiniert verteilt wird, so dass eine prozesssichere Verbindung der Komponenten nicht einwandfrei gewährleistet ist.

Die bekannte Profilleiste hat in verfahrenstechnischer Hinsicht den weiteren Nachteil, dass zusätzliche mechanische Fixierungen erforderlich sind, um eine sichere Aushärtung des Klebstoffes im Rahmen des Bandablaufes zu gewährleisten.

Ein anderes Beispiel für einen bekannten Kofferaufbau ist in der DE 295 19 803 U1 offenbart. Dieser Kofferaufbau weist Horizontal- und Vertikalprofile auf, die zur Verbindung der Wandelemente bzw. Dach- und Bodenelemente verwendet werden. Die Profile sind jeweils zweiteilig ausgebildet und weisen gesonderte Innen- und Außenprofile auf, zwischen denen die jeweiligen Wand- bzw. Boden- oder Dachelemente im montierten Zustand eingeklemmt sind. Die Außen- und Innenprofile umfassen dazu jeweils senkrecht zueinander angeordnete Klemmstege, die durch Eckschrägen miteinander verbunden sind. Im montierten Zustand bilden die Klemmstege der Innen- und Außenprofile Aufnahmetaschen, in denen die Kantenbereiche der Wandelemente bzw. Dach- oder Bodenelemente angeordnet und fixiert sind. Die zweiteilige Ausbildung der Horizontal- und Vertikalprofile erschwert die Montage, da viele Einzelteile gehandhabt und zueinander ausgerichtet werden müssen.

Der Erfindung liegt die Aufgabe zugrunde, einen Kofferaufbau für ein Nutzfahrzeug sowie ein Verfahren zum Herstellen eines Kofferaufbaus für ein Nutzfahrzeug anzugeben, die jeweils eine einfache und sichere Montage des Kofferaufbaus ermöglichen. Ferner soll ein Bausatz und ein Einfassprofil für einen Kofferaufbau sowie ein Nutzfahrzeug mit einem derartigen Kofferaufbau angegeben werden.

Im Hinblick auf den Kofferaufbau wird diese Aufgabe erfindungsgemäß durch den Gegenstand des Anspruchs 1 und im Hinblick auf das Verfahren erfindungsgemäß durch den Gegenstand des Anspruchs 21 gelöst. Im Hinblick auf den Bausatz, das Nutzfahrzeug und das Einfassprofil wird die vorstehend genannte Aufgabe jeweils durch die Gegenstände der Ansprüche 18, 19 und 20 gelöst.

Ein wesentlicher Punkt der Erfindung besteht darin, einen Kofferaufbau für Nutzfahrzeuge mit Plattenelementen anzugeben, die im montierten Zustand winklig angeordnet sind, wobei den Plattenelementen wenigstens ein, insbesondere mehrere Fügehilfsmittel zugeordnet sind, die durch eine Fügebewegung der Plattenelemente betätigbar sind. Die betätigbaren Fügehilfsmittel bieten die Voraussetzung dafür, dass die Montage des Kofferaufbaus bzw. der einzelnen Plattenelemente erleichtert und ein sicherer Ablauf des Montageprozesses gewährleistet wird. Da die Fügehilfsmittel durch die ohnehin erforderliche Fügebewegung der Plattenelemente betätigt werden können, ist eine einfache Handhabung der Plattenelemente bei der Montage möglich.

Der erfindungsgemäße Kofferaufbau bietet insbesondere Vorteile beim Zusammenfügen und Verbinden der Plattenelemente durch Kleben, da im Unterschied zu den starren Aufnahmetaschen des Kofferaufbaus gemäß der DE 43 17 376 A1 die durch die Fügebewegung betätigbaren Fügehilfsmittel eine flexiblere Verfahrensführung zulassen. Dabei wird insbesondere ein großflächiges Verkleben der Plattenelemente ermöglicht, ohne dass die Gefahr besteht, dass der aufgebrachte Klebstoff beim Fügen undefiniert verteilt wird.

Das selbe gilt für das erfindungsgemäße Einfassprofil für einen Kofferaufbau, das wenigstens zwei relativ zueinander bewegbare Profilteile aufweist, die mit Plattenelementen des Kofferaufbaus derart verbindbar sind, dass die Plattenelemente im gefügten Zustand winklig angeordnet sind. Die Profilteile weisen wenigstens ein, insbesondere mehrere Fügehilfsmittel auf, die durch die Relativbewegung der Profilteile betätigbar sind.

Die im Unterschied zu den bekannten starren Profilleisten gemäß DE 43 17 376 A1 relativ zueinander bewegbaren Profilteilen des erfindungsgemäßen Einfassprofils sowie die durch die Relativbewegung der Profilteile betätigbaren Fügehilfsmittel bilden die Voraussetzung für einen flexiblen Montageablauf, der ein sicheres Verkleben der Plattenelemente ermöglicht.

Bei einer bevorzugten Ausführungsform des Kofferaufbaus weisen die Plattenelemente Einfassprofile auf, wobei die Fügehilfsmittel zumindest teilweise an den Einfassprofilen angeordnet sind. Dadurch wird eine einfache Zuordnung der Fügehilfsmittel zu den Plattenelementen ermöglicht, da die Einfassprofile leicht mit den Plattenelementen verbunden werden können. Daneben ist es aber auch möglich, die Fügehilfsmittel direkt an den Plattenelementen auszubilden oder eine Kombination aus verschiedenen Fügehilfsmitteln, die einerseits an den Plattenelementen und andererseits an den Einfassprofilen angeordnet sind, einzusetzen.

Alternativ kann wenigstens ein Plattenelement eine Außendeckschicht aufweisen, die über die Kontur des Plattenelementes vorsteht, wobei die Fügehilfsmittel zumindest teilweise im vorstehenden Bereich der Außendeckschicht angeordnet sind. Eine Kombination aus Einfassprofil an einem Plattenelement und einer vorstehenden Außendeckschicht am anderen Plattenelement ist ebenfalls möglich.

Bei einer weiteren besonders bevorzugten Ausführungsform der Erfindung umfassen die Fügehilfsmittel ein Führungsmittel für eine geführte Fügebewegung und/oder ein Verriegelungsmittel zur Fixierung der Plattenelemente. Das durch die Fügebewegung betätigbare Führungsmittel und die damit ermöglichte geführte Fügebewegung der Plattenelemente führen zu einer Verbesserung des Verklebens der Plattenelemente, wobei ein Verschieben bzw. undefiniertes Verteilen des Klebstoffes vermieden wird, wenn die Plattenelemente miteinander in Kontakt gebracht werden. Im Gegensatz zu den bekannten Aufnahmetaschen, die nur eine achsparallele Fügebewegung zulassen, ist beispielsweise eine Relativbewegung zwischen den Plattenelementen möglich, durch die die zu verbindenden Plattenelemente senkrecht oder durch eine Schwenkbewegung aufeinander zugeführt werden.

Zusätzlich oder alternativ zu dem Führungsmittel kann ein Verriegelungsmittel zur Fixierung der Plattenelemente vorgesehen sein, das ebenfalls durch die Fügebewegung betätigbar ist. Das Verriegelungsmittel hat den Vorteil, dass die zu verbindenden Plattenelemente in einer bestimmten Lage zueinander fixiert werden, so dass die Plattenelemente beim Aushärten nicht verschoben werden können. Da das Verriegelungsmittel durch die Fügebewegung betätigbar ist, entfallen zusätzliche externe Fixierungshilfen, durch die eine Arretierung der Plattenelemente nach dem Fügen bewirkt wird.

Die Fügehilfsmittel können ein Drehgelenk umfassen, wodurch die für die Klebetechnik besonders vorteilhafte geführte Schwenkbewegung der Plattenelemente relativ zueinander ermöglicht wird. Bei dieser Ausführungsform erfolgt die Betätigung der Fügehilfsmittel dadurch, dass das Drehgelenk bewegt und die definierte Schwenkbewegung der Plattenelemente verursacht wird.

Das Drehgelenk kann wenigstens zwei Drehteile umfassen, die zum Fügen in Eingriff bringbar sind. Diese Ausgestaltung der Erfindung ist besonders montagefreundlich, da die einzelnen Plattenelemente, denen die jeweiligen Drehteile zugeordnet sind, flexibel gehandhabt und erst unmittelbar zum Fügen zusammengebracht werden können.

Das Drehgelenk kann zwei hakenförmige Fortsätze aufweisen, die komplementär angeordnet und zum Fügen in Eingriff bringbar sind. Diese Ausgestaltung des Drehgelenkes lässt sich besonders einfach und kostengünstig verwirklichen und ermöglicht die vorstehend erläuterte montagefreundliche Funktion.

Bei einer weiteren besonders bevorzugten Ausführungsform weisen die Fügehilfsmittel ein Rastmittel auf, das durch die Fügebewegung arretierbar ist. Bei dieser Ausführungsform wird die Betätigung der Fügehilfsmittel durch das Arretieren des Rastmittels verwirklicht, das eine einfache und sichere Verriegelung der Plattenelemente zum Aushärten des Klebstoffes ermöglicht.

Das Rastmittel kann eine Rastnase und eine passend ausgebildete Rastausnehmung umfassen, die miteinander verbindbar sind, wobei die Rastnase, bezogen auf eine Kante des zugehörigen Plattenelementes geneigt angeordnet ist. Durch die geneigte Anordnung der Rastnase wird sowohl eine vertikale als auch eine horizontale Fixierung des Plattenelementes erreicht, so dass die Sicherheit des Herstellungsprozesses im Hinblick auf eine maßgenaue Anordnung der Plattenelemente verbessert wird. Generell ist es auch möglich, die Rastnase, bezogen auf die Kante des zugehörigen Plattenelementes gerade, also nicht geneigt anzuordnen, wenn die Fixierung der Plattenelemente nur in einer Richtung ausreicht.

Eine weitere Verbesserung der Prozesssicherheit kann dadurch erreicht werden, dass die Fügehilfsmittel ein Sicherungselement zur Verriegelung des Rastmittels umfassen, so dass das Rastmittel im verrasteten Zustand zusätzlich gesichert werden kann.

Das Sicherungselement kann Rasthaken aufweisen, die durch die Fügebewegung in Eingriff bringbar sind. Das bedeutet, dass eine gesonderte Betätigung des Sicherungselementes nicht erforderlich ist. Vielmehr wird die Betätigung durch die ohnehin erforderliche Fügebewegung der Plattenelemente bewirkt.

Bei einer besonders bevorzugten Ausführungsform umfasst ein Einfassprofil wenigstens zwei relativ zueinander bewegbare Profilteile, die jeweils einem Plattenelement zugeordnet sind. Die Profilteile weisen jeweils einen Verbindungsabschnitt zur Verbindung mit dem Plattenelement und einen Fügeabschnitt auf, in dessen Bereich die Fügehilfsmittel angeordnet sind. Durch die Anordnung der Fügehilfsmittel in einem definierten Bereich, d.h. im Fügeabschnitt wird - insbesondere bei der schwenkbaren Ausführung der Profilteile - gewährleistet, dass die Fügehilfsmittel durch die Fügebewegung gemeinsam betätigt werden können. Dies ist besonders hilfreich, wenn mehrere Fügehilfsmittel mit unterschiedlichen Funktionen vorgesehen sind

Der Fügeabschnitt und der Verbindungsabschnitt können senkrecht angeordnet sein. Daneben ist es auch möglich, den Fügeabschnitt und den Verbindungsabschnitt fluchtend anzuordnen. Die beiden vorstehend genannten Profilteile mit fluchtender und senkrechter Anordnung eignen sich besonders gut für die Kombination zu einem Einfassprofil für - im montierten Zustand - rechtwinklig angeordnete Plattenelemente.

Der Fügeabschnitt kann Abstandshalter aufweisen, die zur Ausbildung eines Aufnahmeraumes für die Fügehilfsmittel im montierten Zustand vorgesehen sind. Dadurch wird eine besonders platzsparende und kompakte Ausführung des Kofferaufbaus ermöglicht.

Die Führungsmittel und die Verriegelungsmittel können voneinander beabstandet angeordnet und durch einen Steg verbunden sein. Der Steg kann dafür genutzt werden, die einzelnen Profilteile beim Fügen der Plattenelemente zu verkleben, indem der Steg als Klebefläche genutzt wird.

Weitere Ausführungsformen der Erfindung sind in den übrigen Unteransprüchen angegeben.

Die Erfindung wird nachfolgend mit weiteren Einzelheiten anhand von Ausführungsbeispielen und unter Bezug auf die beigefügten Zeichnungen näher erläutert.

In diesen zeigen schematisch
- Fig. 1: einen Querschnitt durch einen Kofferaufbau nach einem erfindungsgemäßen Ausführungsbeispiel im Bereich zweier rechtwinklig miteinander verbundener Plattenelemente;
- Fig. 2: den Kofferaufbau gemäß Fig. 1 beim Fügevorgang;
- Fig. 3: einen Querschnitt durch einen Kofferaufbau nach einem anderen erfindungs-gemäßen Ausführungsbeispiel;
- Fig. 4: den Kofferaufbau gemäß Fig. 3 beim Fügevorgang;
- Fig. 5: eine Detailansicht der Fügehilfsmittel des Kofferaufbaus gemäß Fig. 4;
- Fig. 6: einen Querschnitt durch einen Kofferaufbau nach einem weiteren Ausführungsbeispiel im Dachbereich;
- Fig. 7: den Kofferaufbau gemäß Fig. 6 bei der Montage;
- Fig. 8: einen Querschnitt durch einen Kofferaufbau nach einem weiteren erfindungs-gemäßen Ausführungsbeispiel im Dachbereich;
- Fig. 9: den Kofferaufbau gemäß Fig. 8 beim Montagevorgang; und
- Fig. 10: eine Detailansicht der Fügehilfsmittel des Kofferaufbaus gemäß Fig. 9.

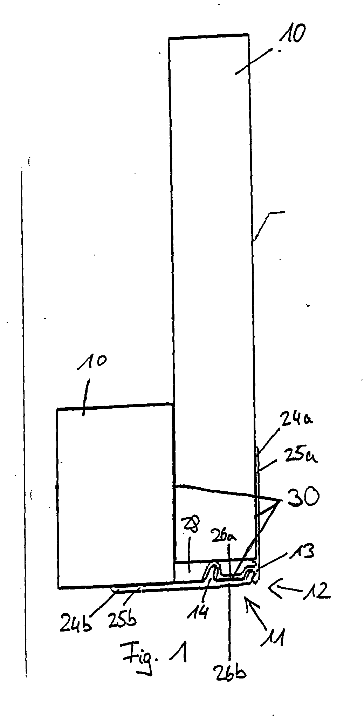

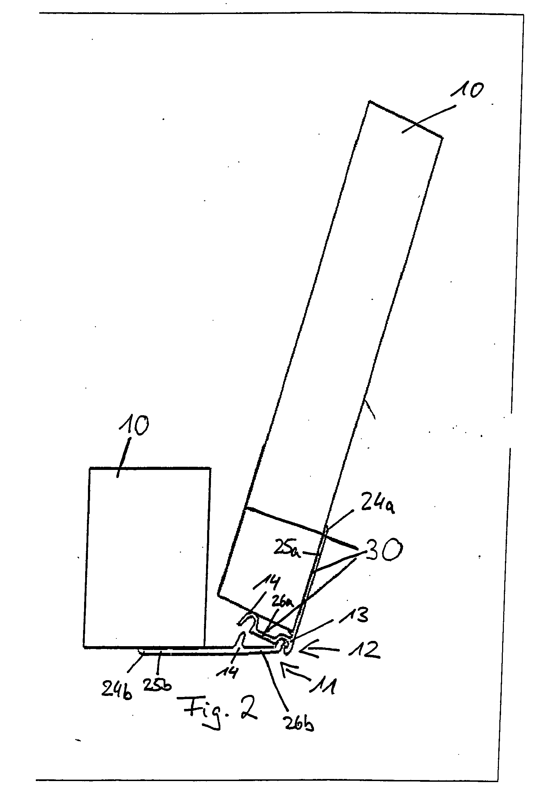

In den Figuren 1 und 2 ist ein Ausführungsbeispiel eines erfindungsgemäßen Kofferaufbaus mit seinen wichtigsten Bauteilen dargestellt und zwar im montierten Zustand (Fig. 1) sowie bei der Montage (Fig. 2). Derartige Aufbauten werden insbesondere als Isolieraufbauten bzw. isolierende Sandwichaufbauten im Nutzfahrzeugbereich sowohl bei Motorfahrzeugen als auch bei Anhängern eingesetzt.

Der Kofferaufbau weist Plattenelemente 10 auf, die im montierten Zustand winklig, insbesondere rechtwinklig angeordnet sind. Bei den Plattenelementen 10 gemäß den Figuren 1, 2 handelt es sich um Plattenelemente für die Seitenwände sowie für den Boden. Die Erfindung ist auch auf andere Plattenelemente 10, bspw. für die Vorder- und Rückwände, bzw. generell auf winklig angeordnete Plattenelemente 10 anwendbar.

Den Plattenelementen 10 sind Fügehilfsmittel 11 zugeordnet, die durch eine Fügebewegung der Plattenelemente 10 betätigbar sind. Unter Fügehilfsmitteln 11 werden allgemein Funktionselemente verstanden, die den Fügevorgang unterstützen bzw. beeinflussen. Die Betätigbarkeit der Fügehilfsmittel 11 bedeutet allgemein, dass die Fügehilfsmittel 11 wenigstens zwei verschiedene Zustände einnehmen können, bspw. eine Offenstellung/Schließstellung oder verschiedene Winkellagen. Zur Betätigung können die Fügehilfsmittel 11 jeweils verschiedenen zu verbindenden Plattenelementen 10 zugeordnet sein, wobei die Fügehilfsmittel 11 der jeweiligen Plattenelemente 10 durch die Fügebewegung zusammenwirken und dadurch betätigt werden.

Dabei können die Fügehilfsmittel 11 direkt an den Plattenelementen 10 oder an anderen Bauteilen angeordnet sein, die mit den Plattenelementen 10 verbunden sind. Bei dem Ausführungsbeispiel gemäß den Figuren 1, 2 sind die Fügehilfsmittel 11 konkret an einem Einfassprofil angeordnet, das mit den beiden angrenzenden Plattenelementen 10 verklebt ist. Die Einfassprofile 12 können als Stahlprofile, Aluminiumprofile, GFK-Profile, CFK-Profile oder dergleichen ausgebildet sein. Wie insbesondere in Fig. 2 zu erkennen, ist das Einfassprofil 12 zweiteilig ausgebildet und weist zwei relativ zueinander bewegbare Profilteile 24a, 24b auf, die jeweils einem Plattenelement 10 zugeordnet sind. Jeweils ein Profilteil 24a, 24b umfasst einen Verbindungsabschnitt 25a bzw. 25b, der als flacher Steg ausgebildet ist und eine Klebefläche bzw. Klebstoffschicht 30 aufweist, die mit einer Auβenfläche des jeweiligen Plattenelementes 10 fest verbunden ist. Zur Unterstützung einer sicheren Anfangshaftung kann eine mechanische Verbindung, bspw. eine Nietverbindung zwischen dem Verbindungsabschnitt 25a, 25b und dem jeweiligen Plattenelement 10 vorgesehen sein. Dies gilt sowohl für die Boden- als auch Dachverbindungen sowie für alle übrigen winklig verbundenen Plattenelemente 10.

Ferner weisen die beiden Profilteile 24a, 24b jeweils einen Fügeabschnitt 26a, 26b auf, in dessen Bereich die Fügehilfsmittel 11 angeordnet sind.

Durch die zweiteilige Ausbildung des Einfassprofiles 12 kann die Fügebewegung zwischen den beiden zu verbindenden Plattenelementen 10 auf die relativ zueinander bewegbaren Profilteile 24a, 24b und somit auf die jeweiligen Fügeabschnitte 26a, 26b übertragen werden. Die an den jeweiligen Fügeabschnitten 26a, 26b vorgesehenen Fügehilfsmittel 11 können auf diese Weise durch die Fügebewegung betätigt werden und wirken beim Fügevorgang zur Verbesserung der Prozesssicherheit zusammen.

Dazu umfassen die Fügehilfsmittel 11 in diesem Ausführungsbeispiel ein Führungsmittel 13 und ein Verriegelungsmittel 14, die jeweils im Bereich der Fügeabschnitte 26a, 26b der beiden Profilteile 24a, 24b angeordnet sind.

Das Führungsmittel 13 ist im Bereich der Außenkanten des Kofferaufbaus angeordnet und bildet den Drehpunkt, um den die definierte Schwenkbewegung eines der beiden Plattenelemente 10 ausgeführt wird. Das Führungsmittel 13 umfasst dazu ein Drehgelenk 15, das aus zwei Drehteilen 16a, 16b gebildet ist. Die beiden Drehteile 16a, 16b sind jeweils einem der zu verbindenden Plattenelemente 10 zugeordnet und können zum Fügen der Plattenelemente 10 miteinander in Eingriff gebracht werden.

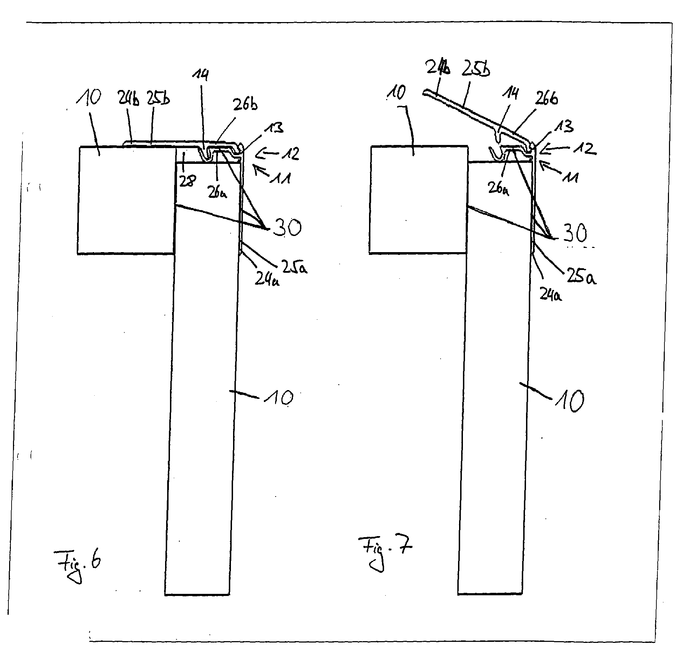

Der genaue Aufbau des Führungsmittels 13 bzw. des Drehgelenks 15 ist in Fig. 5 zu erkennen. Dieser Aufbau ist in allen Ausführungsbeispielen entsprechend verwirklicht und umfasst zwei hakenförmige Fortsätze 17a, 17b, die komplementär angeordnet und zum Fügen in Eingriff bringbar sind. Bei der Darstellung gemäß Fig. 5 sind die beiden Fortsätze 17a, 17b zur Veranschaulichung mit einem Spalt dargestellt. Es versteht sich, dass die Fortsätze 17a, 17b zur Bildung des Drehgelenkes 15 miteinander gelenkig verbunden sind, so dass eine geführte Schwenkbewegung des einen Plattenelementes 10 in Richtung des anderen Plattenelements 10 ermöglicht wird, bis die beiden Plattenelemente 10 in Anlage gebracht sind. Dabei weist einer der beiden Fügeabschnitte 26a, wie in Fig. 5 zu erkennen, im Bereich des Drehgelenkes 15 eine Kröpfung auf, die zusammen mit dem hakenförmigen Fortsatz 17a des selben Fügeabschnittes 26a einen Lagerbereich für den anderen hakenförmigen Fortsatz 17b bildet. Die zweiteilige Form des Drehgelenkes 15 ermöglicht eine flexible Handhabung der verschiedenen Plattenelemente 10, da die Drehteile 16a, 16b erst zum Fügen miteinander in Eingriff gebracht werden müssen.

Andere Formen des Drehgelenkes 15 sind ebenfalls möglich, beispielsweise einteilige Drehgelenke, bei denen auf den Vorteil der flexiblen Handhabung der einzelnen Plattenelemente 10 verzichtet wird. Anstelle des Drehgelenkes 15 könnte eine flexible Kante vorgesehen sein, die die beiden Profilteile 24a, 24b verbindet und eine Schwenkbewegung der beiden Profilteile 24a, 24b ermöglicht. In diesem Fall wäre das Einfassprofil 12 einteilig ausgebildet.

Das Verriegelungsmittel 14 ist vom Führungsmittel 13 und der Außenkante des Kofferaufbaus nach innen beabstandet angeordnet, wie ebenfalls in Fig. 5 zu erkennen. Das Verriegelungsmittel 14 umfasst Rastmittel 18, die jeweils einem der beiden angrenzenden Plattenelemente 10 zugeordnet sind. Durch eine entsprechende Fügebewegung der Plattenelemente 10 können die Rastmittel 18 miteinander in Eingriff gebracht bzw. arretiert werden und bewirken eine Fixierung der Plattenelemente 10 derart, dass ein positionssicheres Aushärten der Klebstoffschicht 30 zwischen den beiden Plattenelementen 10 ermöglicht wird. Konkret umfassen die Rastmittel 18 eine Rastnase 19 und eine passend ausgebildete Rastausnehmung 20, die miteinander verbindbar sind. Die Rastnase 19 ist geneigt angeordnet und zwar bezogen auf eine Kante 21 des Plattenelementes 10, die der Rastnase 19 am nächsten angeordnet ist. Durch die geneigte Anordnung der Rastnase 19 bezogen auf diese Kante 21 wird erreicht, dass die Plattenelemente 10 beim Aushärten sowohl in horizontaler als auch in vertikaler Richtung fixiert sind, wobei die Fixierung in vertikaler Richtung durch die hakenförmigen Fortsätze 17a, 17b unterstützt wird.

Es ist auch denkbar, die Rastnase 19 sowie die entsprechende Rastausnehmung 20 gerade bezogen auf die Kante 21 auszubilden, wodurch nur eine horizontale Fixierung durch das Rastmittel 18 erfolgt. Die vertikale Fixierung könnte allein durch das Drehgelenk 15 oder einfach durch die Gewichtskraft des vertikalen Plattenelementes 10 erfolgen.

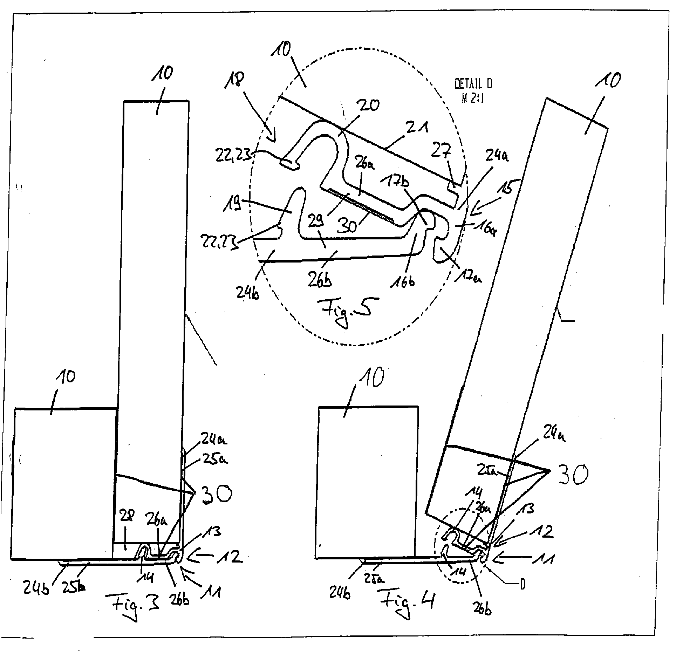

Das Ausführungsbeispiel gemäß den Figuren 3 - 5 unterscheidet sich von dem Ausführungsbeispiel gemäß den Figuren 1, 2 dadurch, dass das Fügehilfsmittel 11 ein Sicherungselement 22 zur Verriegelung der Rastmittel 18 umfasst. Dieses Sicherungselement 22 ist gemäß Fig. 5 als Rasthaken 23 ausgebildet, wobei ein Rasthaken 23 an der Rastnase 19 und ein weiterer Rasthaken 23 an der Rastausnehmung 20 vorgesehen ist. In beiden Ausführungsbeispielen ist die Rastausnehmung 20 als im Querschnitt U-förmiges Profil ausgebildet, das mit der Rastnase 19 in Eingriff bringbar ist. Bei dem Ausführungsbeispiel gemäß Fig. 5 ist zusätzlich noch der Rasthaken 23 an einer Innenkante des U-förmigen Profils der Rastausnehmung 20 vorgesehen. Der Rasthaken 23 der Rastnase 19 ist entsprechend angeordnet.

Die Erfindung umfasst auch Ausführungsbeispiele, bei denen eines der beiden Rastmittel 18 direkt an dem Plattenelement 10 oder an anderen Bauteilen angebracht ist. Beispielsweise könnte die Rastausnehmung 20 in die Unterseite des Plattenelementes 10 integriert oder an einem anderen Hilfsprofil vorgesehen sein.

Wie in den Figuren 1, 2 sowie in den Figuren 3, 4 zu erkennen, sind die beiden Profilteile 24a, 24b unterschiedlich aufgebaut. Bei dem einen Profilteil 24a sind der Verbindungsabschnitt 25a und der Fügeabschnitt 26a senkrecht zueinander angeordnet. Bei dem anderen Profilteil 24b sind der Verbindungsabschnitt 25b und der Fügeabschnitt 26b fluchtend angeordnet. Die beiden Profilteile 24a, 24b können zu einem Einfassprofil 12 kombiniert werden, das im montierten Zustand eine rechtwinklige Anordnung der zu verbindenden bzw. der verbundenen Plattenelemente 10 ermöglicht. Dabei ist das Profilteil 24a mit dem senkrecht angeordneten Fügeabschnitt 26a und Verbindungsabschnitt 25a für das vertikal angeordnete Plattenelement 10 vorgesehen, das als Seitenwand dient. Das Profilteil 24b mit dem fluchtend angeordneten Verbindungsabschnitt 25b und Fügeabschnitt 26b ist für das horizontal angeordnete Plattenelement 10, das als Boden oder Dach dient, vorgesehen.

Der senkrecht zum Verbindungsabschnitt 25a angeordnete Fügeabschnitt 26a weist einen Abstandshalter 27 zur Ausbildung eines Aufnahmeraumes 28 für die Fügehilfsmittel 11 im montierten Zustand auf (s. Fig. 5). Der Abstandshalter 27 ist senkrecht zu dem Verbindungsabschnitt 25a angeordnet und bildet mit diesem einen Aufnahmewinkel, in den die Außenkante des vertikalen Plattenelementes 10 eingesetzt ist. Die Oberseite der Rastausnehmung 20 bildet mit dem Abstandshalter 27 eine Ebene, die der Unterseite des vertikalen Plattenelementes 10 entspricht. Im montierten Zustand ist das vertikale Plattenelement 10 auf dem Abstandshalter 27 und der Rastausnehmung 20 abgestützt, so dass die Ortslage des vertikalen Plattenelementes 10 bezogen auf das horizontale Plattenelement 10 festgelegt ist. Diese Lage ist im montierten Zustand durch das Rastmittel 18 fixiert, so dass das Aushärten des Klebstoffes zwischen den beiden Plattenelementen 10 positionssicher erfolgt. Der Abstandshalter 27 und die Rastausnehmung 20 bilden ferner einen Aufnahmeraum 28, in dem die Fügehilfsmittel 11 im montierten Zustand angeordnet sind, so dass eine im Wesentlichen plane Unterseite des Kofferaufbaus erreicht wird, wie in den Figuren 1, 2 und in den Figuren 3, 4 zu erkennen.

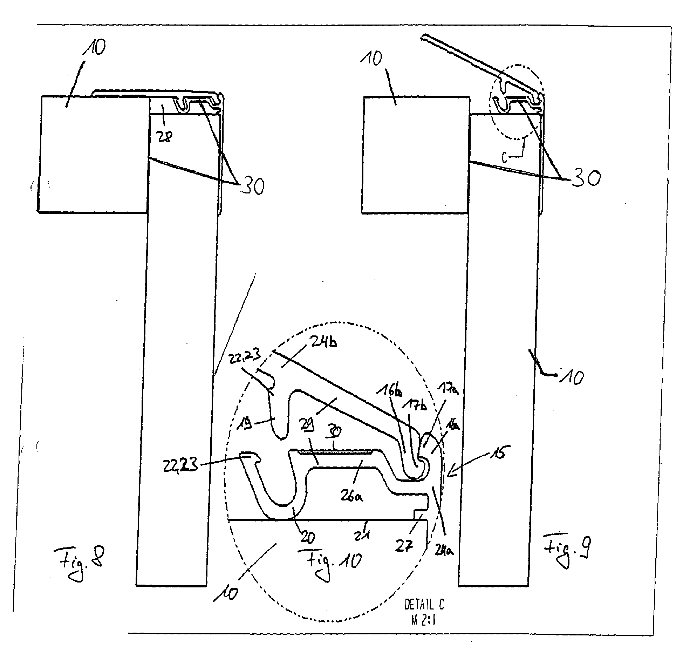

Die Rastmittel 18 sowie das Drehgelenk 15 sind bei beiden Profilteilen 24a, 24b durch einen Steg 29 miteinander verbunden. Die einander zugewandten Seiten dieses Steges 29 der beiden Profilteile 24a, 24b sind jeweils mit einer Klebstoffschicht 30 versehen, wodurch eine zusätzliche feste Verbindung zwischen den Profilteilen 24a, 24b geschaffen wird. Der in den Figuren 1 - 5 dargestellte Aufbau kann zur Verbindung der Seitenwände mit dem Boden des Kofferaufbaus sowie mit den Stirn- und Rückwänden eingesetzt werden. Das selbe gilt für die Verbindung zwischen den Seitenwänden bzw. der Stirn- und Rückwand mit dem Dach, wie in den Figuren 6 - 10 dargestellt, wobei hier eine andere Montagetechnik zur Anwendung kommt, die noch im Einzelnen erläutert wird.

Die in den Figuren 1 - 10 dargestellten Ausführungsbeispiele haben insgesamt den Vorteil, dass diese zur Verbindung aller winklig angeordneten Plattenelemente 10 eines Kofferaufbaus eingesetzt werden können.

Der Kofferaufbau kann auch als Bausatz mit den vorstehend erläuterten Elementen geliefert werden und wird entsprechend von der Erfindung umfasst. Des weiteren wird ein (nicht dargestelltes) Nutzfahrzeug mit einem derartigen Kofferaufbau beansprucht.

Die in den Figuren 1 - 10 dargestellten Einfassprofile 12 können gesondert hergestellt und geliefert werden, weshalb auch die Einfassprofile an sich als von der Erfindung umfasst beansprucht werden.

Das Verfahren zum Herstellen des Kofferaufbaus wird beispielhaft anhand des folgenden Montageablaufes nachfolgend beschrieben.

Bei dem Herstellungsverfahren kommt es darauf an, dass die Fügehilfsmittel 11 bei der Montage der Plattenelemente 10 durch die Fügebewegung betätigt werden und dadurch den Montagevorgang unterstützen. Durch die Betätigung der Fügehilfsmittel 11 wird zum einen erreicht, dass beim Fügevorgang eine Schwenktechnik angewandt wird, die zu einer prozesssicheren Verklebung der Bauelemente führt. Außerdem werden die Plattenelemente 10 durch die Betätigung der Fügehilfsmittel 11 passgenau angeordnet und verriegelt, so dass ein Aushärten des Klebstoffes ohne Veränderung der Ortslage der Plattenelemente 10 erfolgt.

Konkret werden die senkrecht stehenden Plattenelemente 10 oben und unten im Rahmen der Vormontage mit je einem identischen Profilteil 24a versehen. Das mit dem senkrechten Plattenelement 10 zu verbindende horizontale Plattenelement 10, insbesondere das Bodenelement erhält auf der Unterseite in einem separaten Vormontageprozess das dazu passende Profilteil 24b, das über die Außenkontur des Plattenelementes 10 hinausragt. Die beiden Profilteile 24a, 24b werden mit den zugehörigen Plattenelementen 10 verklebt und zwar im Bereich der Verbindungsabschnitte 25a, 25b. Andere Befestigungsmöglichkeiten, beispielsweise durch Verschrauben oder Vernieten sind möglich.

Im Rahmen des Fügevorganges der einzelnen Komponenten erfolgt zunächst ein definierter Klebstoffauftrag auf die Schnittstelle zwischen den beiden Profilteilen 24a, 24b, insbesondere im Bereich der beiden Stege 29. Außerdem werden sämtliche Fügestellen der Plattenelemente 10, d.h. die Stirnseite des horizontal angeordneten Plattenelementes 10 sowie der entsprechende Seitenflächenbereich des senkrecht anzuordnenden Plattenelementes 10 mit Klebstoff versehen, so dass die in den Figuren 1 - 5 dargestellten Klebstoffschichten 30 gebildet werden.

Dann wird das Profilteil 24a des senkrechten anzuordnenden Plattenelementes 10 auf das Profilteil 24b des horizontalen Plattenelementes 10 aufgesetzt. Dazu sind die beiden Plattenelemente 10 unter einem Winkel angeordnet, der größer als 90° ist. Beim Aufsetzen werden die Drehteile 16a, 16b der beiden Profilteile 24a, 24b miteinander in Eingriff gebracht, wie in Fig. 5 zu erkennen. Die Fügestellen liegen dabei noch offen.

Daraufhin wird das als Seitenwand dienende Plattenelement 10 in die senkrechte Position eingeschwenkt, wobei die Schwenkbewegung durch das Drehgelenk 15 bestimmt wird, das aus den nunmehr gelenkig miteinander verbundenen Drehteilen 16a, 16b gebildet ist. Durch die geführte Schwenkbewegung wird erreicht, dass die Fügestellen derart miteinander in Kontakt gebracht werden, dass ein Verschieben des Klebstoffes verhindert wird.

Beim Einschwenken kommen die Rastnase 19 und die Rastausnehmung 20 in Eingriff und bilden somit das Rastmittel 18, das im eingeschwenkten Zustand, d.h. in der senkrechten Position der beiden Plattenelemente 10 arretiert ist. Die Arretierung erfolgt dabei durch die geneigte Anordnung der Rastnase bezogen auf die Kante 21 des senkrechten Plattenelementes 10. Die beiden Profilteile 24a, 24b sind damit durch die Fügebewegung automatisch verriegelt und verpressen den eingebrachten Klebstoff mit den zu fügenden Komponenten. Bei dem Ausführungsbeispiel gemäß Fig. 5 erfolgt neben der automatischen Verriegelung noch zusätzlich eine Verclipsung der Profilteile 24a, 24b durch das Sicherungselement 22. Dabei kommen die beiden Rasthaken 23 an der Rastnase 19 sowie an der Unterkante der Rastausnehmung 20 in Eingriff, so dass eine besonders sichere Verbindung gewährleistet ist. Um eine sichere Anfangshaftung zwischen den Stegen 29 der beiden Profilteile 24a, 24b zu gewährleisten, können die Stege 29 mechanisch verbunden, bspw. vernietet werden.

Die Montage der Vorder- und Rückwand erfolgt entsprechend.

Für die Montage des Dachelementes werden identische Einfassprofile 12 verwendet, wie für die Montage der Seitenwände und des Bodens. Beim Fügevorgang wird das als Dach dienende Plattenelement 10 von oben abgesenkt, wobei die als Seitenwände dienenden Plattenelemente 10 noch nicht komplett eingeschwenkt sind. Das Dachplattenelement 10 wird in die Endlage gebracht und dort anderweitig fixiert, beispielsweise durch einen am Dachplattenelement 10 vorgesehenen Falz oder andere Aufnahmehilfen, beispielsweise Auflagewinkel.

Daraufhin werden die als Seitenwände dienenden Plattenelemente 10 endgültig eingeschwenkt, so dass die mit der Klebstoffschicht 30 versehenen Fügestellen in Kontakt kommen.

Daraufhin wird das Profilteil 24b aufgesetzt derart, dass das Drehgelenk 15 gebildet und das Profilteil 24b eingeschwenkt wird (s. Figuren 7, 9 und 10).

Alternativ dazu ist es auch möglich, dass das als Dach dienende Plattenelement 10 und ein als Seitenwand dienendes Plattenelement 10, wie vorstehend im Zusammenhang mit dem Aufbauboden erläutert, durch eine Schwenkbewegung zusammengefügt werden, wobei allerdings das senkrechte Plattenelement 10 ortsfest angeordnet ist und das als Dach dienende Plattenelement 10 in die horizontale Lage eingeschwenkt wird. Das horizontal angeordnete Plattenelement 10 wird gesondert fixiert, woraufhin die übrigen als Seiten-, Rück- und Vorderwände dienende Plattenelemente 10 eingeschwenkt werden. Die noch fehlenden oberen Einfassprofile 12 werden dann vervollständigt.

Bei der Montage des als Dach dienenden Plattenelementes 10 ist die Verriegelung der einzelnen Profilteile 24a, 24b nicht unbedingt erforderlich, so dass die entsprechenden Rastmittel 18 weggelassen werden können.

Daneben ist es auch möglich, die Einfassprofile 12 nur mit Rastmitteln 18 zu versehen und die Fügebewegung anderweitig als durch das Drehgelenk 15 zu steuern. Wenn auf die passgenaue Fixierung der Plattenelemente 10 verzichtet wird oder eine externe Fixierung durch gesonderte Fixierelemente erfolgt, kann nur das Führungsmittel 13, beispielsweise das Drehgelenk 15 vorgesehen sein und auf die Rastmittel 18 verzichtet werden.

Ein oder beide Einfassprofile 12 können auch dadurch ersetzt werden, dass eine Außendeckschicht des einen bzw. der beiden Plattenelemente 10 jeweils über deren Kontur erstreckt ist bzw. vorsteht. Die Fügehilfsmittel 11 sind in diesem vorstehenden Bereich der Außendeckschicht angeordnet, die funktional dem vorstehend beschriebenen Fügeabschnitt 26a, 26b, insbesondere bei der fluchtenden Anordnung für die horizontal angeordneten Plattenelemente 10 entspricht. Für die Scharnierfunktion kann ein Drehgelenk jeweils an der Außenkante des vorstehenden Abschnittes der Außendeckschicht in der vorstehend beschriebenen Weise vorgesehen sein. Das Rastmittel 18 ist bei der für das horizontale Plattenelement 10 vorgesehenen Ausführung entsprechend der vorstehend beschriebenen fluchtenden Anordnung ebenfalls im Bereich des über die Kontur des Plattenelementes 10 hinausragenden Abschnittes der Außendeckschicht angeordnet. Aufgrund der winkligen Anordnung der Plattenelemente 10 ist das komplementäre Rastmittel des anderen Plattenelementes 10, d.h. des vertikal angeordneten Plattenelementes 10 entweder in der entsprechenden Unterseite des Plattenelementes 10 integriert oder durch ein geeignet angeordnetes Hilfsprofil positioniert. Es ist auch möglich, für das im Gebrauch senkrechte Plattenelement 10 das vorstehend beschriebene Profilteil 24a mit senkrechter Anordnung zu verwenden und mit der verlängerten Außendeckschicht für das waagrechte Plattenelement zu kombinieren.

Die vorstehend beschriebenen Ausführungsbeispiele bieten unter anderem den Vorteil, dass die zu fügenden Bauelemente in der Montagestation passgenau fixiert werden. Durch die Möglichkeit, die Bauelemente beim Fügevorgang zu verriegeln, wird ein positionsfestes Aushärten der Klebstoffschicht 30 gewährleistet. Die geführte Fügebewegung ermöglicht das prozesssichere Verkleben der Bauelemente während des Fügevorgangs unter Einhaltung von kurzen Taktzeiten im Bandablauf. Dabei ist ein nur minimaler Einsatz von Profiltechnik erforderlich, um die gewünschte Verbesserung der Prozesssicherheit zu erreichen. Die in den vorstehend erläuterten Ausführungsbeispielen verwendeten Einfassprofile 12 können einfach durch Strangpressen, bspw. bei Verwendung von Aluminiumprofilen oder durch andere Herstellungsverfahren bei Verwendung anderer Materialien wie CFK oder GFK gefertigt werden.

### Bezugszeichenliste:

- 10: Plattenelement
- 11: Fügehilfsmittel
- 12: Einfassprofil
- 13: Führungsmittel
- 14: Verriegelungsmittel
- 15: Drehgelenk
- 16a, 16b: Drehteile
- 17a, 17b: Fortsätze
- 18: Rastmittel
- 19: Rastnase
- 20: Rastausnehmung
- 21: Kante
- 22: Sicherungselement
- 23: Rasthaken
- 24a, 24b: Profilteile
- 25a, 25b: Verbindungsabschnitt
- 26a, 26b: Fügeabschnitt
- 27: Abstandshalter
- 28: Aufnahmeraum
- 29: Steg

## Patentansprüche

1. Kofferaufbau mit Plattenelemente (10), die im montierten Zustand winklig angeordnet sind,
**dadurch gekennzeichnet,dass**
den Plattenelementen (10) wenigstens ein, insbesondere mehrere Fügehilfsmittel (11) zugeordnet sind, die durch eine Fügebewegung der Plattenelemente (10) betätigbar sind.

2. Kofferaufbau nach Anspruch 1,
**dadurch gekennzeichnet,dass**
die Plattenelemente (10) Einfassprofile (12) aufweisen, wobei die Fügehilfsmittel (11) zumindest teilweise an den Einfassprofilen (12) angeordnet sind.

3. Kofferaufbau nach Anspruch 1,
**dadurch gekennzeichnet,dass**
wenigstens ein Plattenelement (10) eine Außendeckschicht aufweist, die über die Kontur des Plattenelementes (10) vorsteht, wobei die Fügehilfsmittel (11) zumindest teilweise im vorstehenden Bereich der Außendeckschicht angeordnet sind.

4. Kofferaufbau nach wenigstens einem der Ansprüche 1 bis 3,
**dadurch gekennzeichnet,dass**
die Fügehilfsmittel (11) ein Führungsmittel (13) für eine geführte Fügebewegung und/oder ein Verriegelungsmittel (14) zur Fixierung der Plattenelemente (10) umfassen.

5. Kofferaufbau nach wenigstens einem der Ansprüche 1 bis 4
**dadurch gekennzeichnet,dass**
die Fügehilfsmittel (11) ein Drehgelenk (15) umfassen.

6. Kofferaufbau nach wenigstens einem der Ansprüche 1 bis 5
**dadurch gekennzeichnet,dass**
das Drehgelenk (15) wenigstens zwei Drehteile (16a, 16b) umfasst, die zum Fügen in Eingriff bringbar sind.

7. Kofferaufbau nach Anspruch 5 oder 6,
**dadurch gekennzeichnet,dass**
das Drehgelenk (15) zwei hakenförmige Fortsätze (17a, 17b) aufweist, die komplementär angeordnet und zum Fügen in Eingriff bringbar sind.

8. Kofferaufbau nach wenigstens einem der Ansprüche 1 bis 7,
**dadurch gekennzeichnet,dass**
die Fügehilfsmittel (11) ein Rastmittel (18) aufweisen, das durch die Fügebewegung arretierbar ist.

9. Kofferaufbau nach wenigstens einem der Ansprüche 1 bis 8,
**dadurch gekennzeichnet,dass**
das Rastmittel (18) eine Rastnase (19) und eine passend ausgebildete Rastausnehmung (20) umfasst, die miteinander verbindbar sind, wobei die Rastnase (19), bezogen auf eine Kante (21) des zugehörigen Plattenelementes (10) geneigt angeordnet ist.

10. Kofferaufbau nach Anspruch 8 oder 9,
**dadurch gekennzeichnet, dass**
die Fügehilfsmittel (11) ein Sicherungselement (22) zur Verriegelung des Rastmittels (18) umfassen.

11. Kofferaufbau nach Anspruch 10,
**dadurch gekennzeichnet,dass**
das Sicherungselement (22) Rasthaken (23) aufweist, die durch die Fügebewegung in Eingriff bringbar sind.

12. Kofferaufbau nach wenigstens einem der Ansprüche 2 und 4 bis 10,
**dadurch gekennzeichnet, dass**
ein Einfassprofil (12) wenigstens zwei relativ zueinander bewegbare Profilteile (24a, 24b) umfasst, die jeweils einem Plattenelement (10) zugeordnet sind, wobei die Profilteile (24a, 24b) jeweils einen Verbindungsabschnitt (25a, 25b) zur Verbindung mit dem jeweiligen Plattenelement (10) und einen Fügeabschnitt (26a, 26b) aufweisen, in dessen Bereich die Fügehilfsmittel (11) angeordnet sind.

13. Kofferaufbau nach Anspruch 12,
**dadurch gekennzeichnet,dass**
der Fügeabschnitt (26a) und der Verbindungsabschnitt (25a) senkrecht zueinander angeordnet sind.

14. Kofferaufbau nach Anspruch 12,
**dadurch gekennzeichnet,dass**
der Fügeabschnitt (26b) und der Verbindungsabschnitt (25b) fluchtend angeordnet sind.

15. Kofferaufbau nach Anspruch 13 und 14,
**dadurch gekennzeichnet,dass**
ein Profilteil (24a) mit senkrecht angeordneten und ein Profilteil (24b) mit fluchtend angeordnetem Fügeabschnitt (26a, 26b) und Verbindungsabschnitt (25a, 25b) zu einem Einfassprofil (12) kombiniert sind.

16. Kofferaufbau nach wenigstens einem der Ansprüche 12 bis 15,
**dadurch gekennzeichnet,dass**
der Fügeabschnitt (26a) Abstandshalter (27) zur Ausbildung eines Aufnahmeraumes (28) für die Fügehilfsmittel (11) im montierten Zustand aufweist.

17. Kofferaufbau nach wenigstens einem der Ansprüche 4 bis 16,
**dadurch gekennzeichnet,dass**
die Führungsmittel (13) und die Verriegelungsmittel (14) voneinander beabstandet angeordnet und durch einen Steg (19) verbunden sind.

18. Bausatz für einen Kofferaufbau nach wenigstens einem der Ansprüche 1 bis 17.

19. Nutzfahrzeug mit einem Kofferaufbau nach wenigstens einem der Ansprüche 1 bis 17.

20. Einfassprofil für einen Kofferaufbau mit wenigstens zwei relativ zueinander bewegbaren Profilteilen (24a, 24b), die mit Plattenelementen (10) des Kofferaufbaus derart verbindbar sind, dass die Plattenelemente (10) im gefügten Zustand winklig angeordnet sind, wobei die Profilteile (24a, 24b) wenigstens ein, insbesondere mehrere Fügehilfsmittel (11) aufweisen, die durch die Relativbewegung der Profilteile (24a, 24b) betätigbar sind.

21. Verfahren zum Herstellen eines Kofferaufbaus für ein Nutzfahrzeug, bei dem Plattenelemente (10) zu einer winkligen Anordnung zusammengefügt werden,
**dadurch gekennzeichnet, dass**
durch die Fügebewegung wenigstens ein, insbesondere mehrere Fügehilfsmittel (11) betätigt werden, die den Plattenelementen (10) zugeordnet sind.

22. Verfahren nach Anspruch 21,
**dadurch gekennzeichnet,dass**
die Plattenelemente (10) mittels der Fügehilfsmittel (11) durch eine geführte Bewegung gefügt werden.

23. Verfahren nach Anspruch 20 oder 21,
**dadurch gekennzeichnet, dass**
die Plattenelemente (10) mittels der Fügehilfsmittel (11) winklig angeordnet fixiert werden
